# EUROPEAN PATENT APPLICATION

(11) **EP 1 189 229 A2**
(43) Date of publication of application: **20.03.2002**
(21) Application number: 01124775.6
(22) Date of filing: 13.05.1999
(51) Int. Cl.: G11B 23/087

(54) **Magnetic tape cassette**

(30) Priority: 13.05.1998 JP 13052798; 13.05.1998 JP 13052898; 22.05.1998 JP 14141498
(62) Divisional of application: 99919555.5
(71) Applicant: Fuji Photo Film Co., Ltd., Kanagawa 250-0123 (JP)
(72) Inventor: Kita, Akihisa, Odawara-shi, Kanagawa 250-0001 (JP); Yamaguchi, Tatsuya, Odawara-shi, Kanagawa 250-0001 (JP); Ashikawa, Teruo, Odawara-shi, Kanagawa 250-0001 (JP); Takano, Atsushi, Odawara-shi, Kanagawa 250-0001 (JP)
(74) Representative: Grünecker, Kinkeldey, Stockmair & Schwanhäusser Anwaltssozietät

(57) **Abstract**

A magnetic tape cassette comprising a cassette case having upper and lower halves and including an opening at the front end thereof, a pair of reels which are respectively so stored within said cassette case as to be freely rotatable while said two reels are energized toward the side of said lower half by their associated leaf springs, and around which a magnetic tape can be wound, a lid mounted for covering said magnetic tape passing through said opening in such a manner that said magnetic tape can be freely opened and closed, wherein said lid includes an outer lid which is provided with a front lid plate for covering the side of said front surface of said magnetic tape and two side plates respectively extended from two sides of said front lid plate, a lid lock for locking said lid in the closed state of said opening, a lid spring for energizing said lid in the closed state of said lid and simultaneously energizing said lid lock in the closed state of said lid, wherein said lid spring comprises a coil portion mounted on a pin erected at a right angle from one of said side plates, a first leg portion extended from one end of said coil portion and secured to a first projection portion provided on said side plate of said lid, and a second other leg portion extended from the other end of said coil portion and secured to a second projection portion of said side plate of said lid and also to said upper half so as to be engaged with said lid lock from the side of said upper half, and a throttle-shaped engaging recessed portion disposed on said upper half for receiving and engaging with a leading end portion of said second leg portion.

## Description

The present invention relates to a magnetic tape cassette according to the preamble portion of claim 1 which can be suitably applied to a video tape cassette and the like.

Conventionally, there are known various kinds of magnetic tape cassettes and, for example, there is known a magnetic tape cassette for a digital video cassette (DVC). The magnetic tape cassette for a digital video cassette (DVC) is classified into three kinds of cassettes according to uses; that is, S, M and L cassettes.

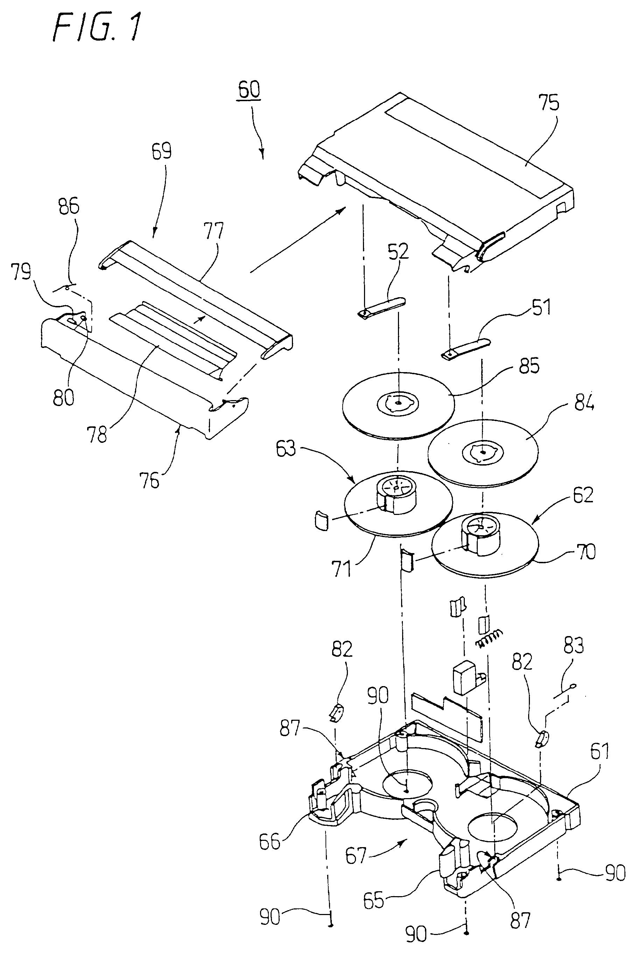

For example, here is known a magnetic tape cassette 60 for a digital video cassette (DVC) so called as M or L cassette, the exploded structure of which is shown in Fig. 1.

As shown in Fig. 1, the magnetic tape cassette 60 so called as M or L cassette includes upper and lower halves 75 and 61 and, in the lower half 61, there are rotatably stored a pair of reels 62 and 63 which are respectively composed of upper and lower flanges. And, around the two reels 62 and 63, there is wound magnetic tape (not shown).

The two reels 62 and 63 are respectively composed of upper flanges 84, 85 and lower flanges 70, 71 and, over the whole periphery of the respective peripheral edges of the lower flanges 70 and 71, there are formed engaging teeth. And, the two reels 62 and 63 are respectively energized toward the lower half 61 side by their associated leaf springs 51 and 52. Also, the magnetic tape is guided by two tape guides 65 and 66 which are respectively disposed on the front side of the cassette (in Fig. 1, on the left) and on the right and left sides of the cassette, so that the magnetic tape is allowed to pass through an opening 67 formed on the front surface side of the lower half 61.

On the upper half 75 which cooperates together with the lower half 61 in forming the cassette case, there is mounted a lid 69 which is used to cover the magnetic tape passing through the opening 67 formed in the front end portion of the cassette, while the lid 69 is arranged in such a manner that it can be freely opened and closed. The lid 69 is composed of three components: that is, an outer lid 76, a top lid 77 and an inner lid 78.

On the inner side of a side plate 79 of the outer lid 76, there is projectingly provided a lock pin 80. And, on the side plate portion of the lower half 61, there is rotatably mounted a lid lock 82 which is capable of securing the lock pin 80 to thereby lock the lid 69 in the closed state of the opening 67. Further, on the cassette rear side of the lid lock 82, there is disposed a lid lock spring 83 which is used to energize the lid lock 82 into the closed state of the lid 69.

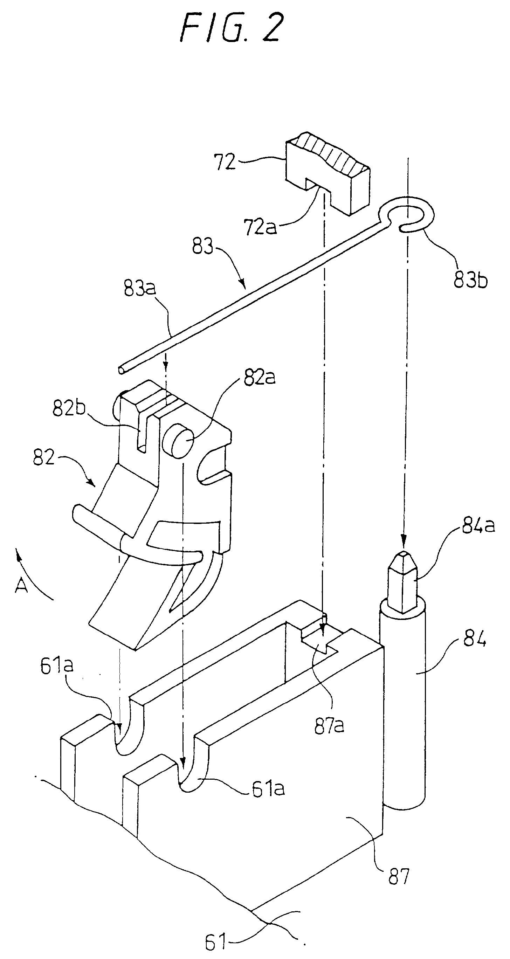

As shown in Fig. 2, the lid lock spring 83 is composed of a line spring 83a and a ring portion 83b formed on one end of the line spring 83a. In particular, the ring portion 83b of the lid lock spring 83 is mounted on a mounting pin 84a of a cylindrical-shaped boss 84 formed in the lower half 61, and the intermediate portion of the free end of the line spring 83a is engaged into a guide groove 87a formed in the upper end of a guide member 87 which is disposed in a portion of the side plate portion of the lower half 61: that is, the lid lock spring 83 is mounted on the lower half 61 in this manner to thereby be able to energize the lid lock 82 in a lock direction A. By the way, the mounting pin 84a has such a sufficient height that, if the line spring 83a is engaged in this manner, then it can secure the line spring 83a provisionally until the upper half 75 is placed over the lower half 61.

And, if the upper half 75 is placed over the lower half 61, then a guide groove 72a formed in a guide member 72, which is provided on and projected from the inner wall surface of the upper half 75, is engaged with the intermediate portion of the line spring 83a from above, while the line spring 83a is mounted straddlingly on both of the cylindrical-shaped boss 84 and guide member 87, whereby the position of the line spring 83a can be determined. Then, the free end of the line spring 83a is engaged with the lid lock 82 from the upper half 75 side (from above) to thereby be able to energize the lid lock 82 into its closed state.

And, with the lid lock 82 mounted on the lower half 61, the upper half 75 is assembled to the lower half 61 from above the lower half 61 and, after then, the thus assembled cassette case is turned upside down, that is, the lower half 61 is positioned on the upper side of the cassette case. Then, in this state, if screws 90 shown in Fig. 1 are respectively tightened by a driver or the like, then the assembling operation of the cassette case can be completed.

However, in the above-mentioned state where the cassette case is turned upside down and the lower half 61 is thereby placed on the upper side of the cassette case, until the upper and lower halves 75 and 61 are assembled or screwed together by the screws 90, the lower half 61 is caused to float slightly from the upper half 75 due to the energizing forces of the leaf springs 51 and 52. Here, if the ring portion 83b of the lid lock spring 83 is fitted tightly with the mounting pin 84a, then there arises no problem. However, if the ring portion 83b is loosely fitted with the mounting pin 84a due to an error or the like produced when they are manufactured, in the state where the lower half 61 floats from the upper half 75, the ring portion 83b can be removed from the mounting pin 84a, or the line spring 83a can be rotated about the mounting pin 84a due to vibrations or the like.

The above-mentioned two guide grooves 72a and 87a are slightly different in position from each other along the extending direction of the line spring 83a and thus, in the state where the lower half 61 floats from the upper half 75, there is produced a gap between the two guide grooves 72a and 87a. Therefore, if the line spring 83a is rotated due to vibrations or the like and is thereby removed from the two guide grooves 72a and 87a once, when tightening together the upper and lower halves 75 and 61 by the screws, the line spring 83a is not able to return into the two guide grooves 72a and 87a, which makes it impossible to assemble together the upper and lower halves 75 and 61 properly.

Also, even after the cassette is assembled, there is a fear that the line spring 83a can be removed from the two guide grooves 72a and 87a due to shocks which are given when the cassette happens to drop down onto the ground or the like. To prevent these problems, the ring portion 83b and mounting pin 84a must be fitted together tightly. However, to realize such tight fit, the ring portion 83b and mounting pin 84a must be produced with high precision.

This is a first problem in the conventional magnetic tape cassette.

Note that the magnetic tape cassette of M or L type, so simply called as M or L cassette, is particularly different from the magnetic tape cassette of S type, so called as a S-cassette, in a structure regarding to one of lid locks and a lid lock spring. That is, since the S-cassette is smaller in size than the M or L cassette and in turn an urging force for keeping the lid assemble into a closed state is not large, one of lid locks (for example, a right side lid lock 82 and a lid lock spring 83 is eliminated.

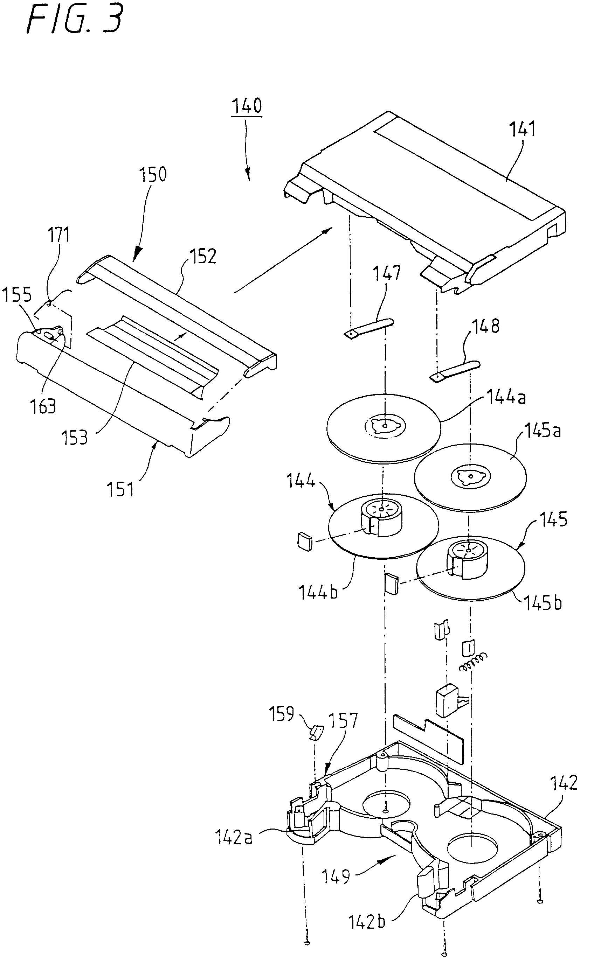

Now, in Fig. 3, there is shown an exploded perspective view of a magnetic tape cassette of S type (S-cassette) for DVC. As shown in Fig. 3, the present magnetic tape cassette 140 includes upper and lower halves 141 and 142 and, within the lower half 142, there are rotatably stored a pair of reels 144 and 145 which are respectively composed of upper and lower flanges. And, around the two reels 144 and 145, there is wound magnetic tape (not shown).

The two reels 144 and 145 are respectively composed of upper flanges 144a, 145a and lower flanges 144b, 145b and, over the whole periphery of the respective peripheral edges of the lower flanges 144b and 145b, there are formed engaging teeth. And, the two reels 162 and 163 are respectively energized toward the lower half 142 side by their associated leaf springs 147 and 148. Also, the magnetic tape is guided by two tape guides 142a and 142b which are respectively disposed on the front side of the cassette (in Fig. 3, on the left) and on the right and left sides of the cassette, so that the magnetic tape is allowed to pass through an opening 149 formed on the front surface side of the lower half 142.

On the upper half 141 which cooperates together with the lower half 142 in forming the cassette case, there is mounted a lid 150 which is used to cover the magnetic tape passing through the opening 149 formed in the front end portion of the cassette, while the lid 150 is arranged in such a manner that it can be freely opened and closed. The lid 150 is composed of three components: that is, an outer lid 151, a top lid 152 and an inner lid 153.

On the inner side of one side plate 155 of the outer lid 151, there is provided a lock projection 163. And, on the side plate portion 157 of the lower half 142, there is rotatably mounted a lid lock 159 which is capable of securing the lock projection 163 to thereby lock the lid 150 in the closed state of the opening 149.

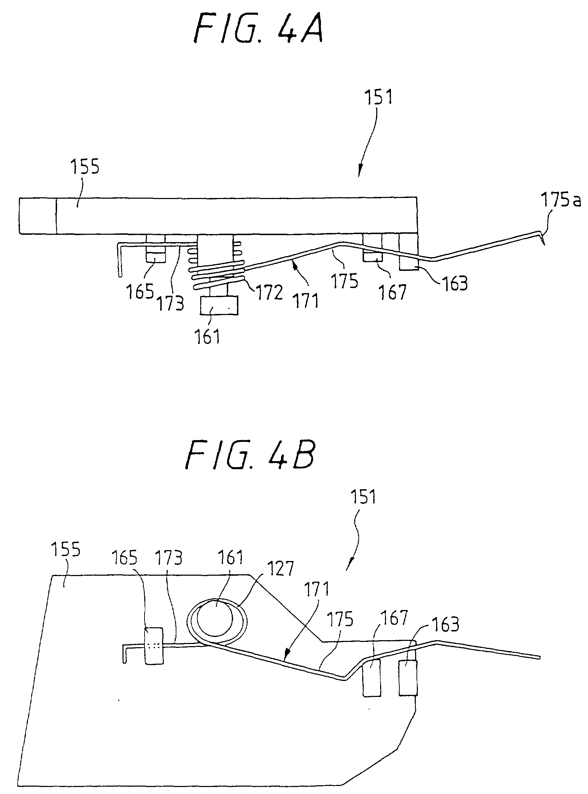

Now, in Fig. 4A, there is shown an upper surface view of the side plate 155 of the outer lid 151 and, in Fig. 4B, there is shown a side view of the side plate 155 of the outer lid 151. As shown in Figs. 3, 4A and 4B, on the side plate 155 of the outer lid 151, there is mounted a lid spring 171. In particular, the lid spring 171 is structured such that a coil portion 172 thereof is mounted on a pin 161 of the side plate 155, one leg portion 173 thereof is secured to a first projection portion 165 formed in the side plate 155 of the outer lid 151, and the other leg portion 175 is secured to a second projection portion 167 formed on the side plate 155 as well as to a projection portion (not shown) formed on the front end of the upper half 141 to be thereby engaged with the lid lock 159 from the upper half 141 side, whereby the lid spring 171 is able to energize the lid lock 159 into a closed state thereof. Further, the lid spring 171 also has a function to energize the lid 150 into a closed state thereof.

By the way, because the leg portion 175 of the lid spring 171 has to energize the lid lock 159 with a given energizing force, the leg portion must be held at a proper position with respect to the lid lock 159. For this reason, conventionally, by bending the leading end portion 175b of the leg portion 175, the leading end portion 175b can be engaged with a recessed portion (not shown) formed in the upper half 141 to thereby hold the leg portion 175 of the lid spring 171 at a proper position. However, since the lid spring 171 is a small-size part (that is, the overall length of a lid spring for use in an S type of cassette is about 15 mm), it takes time and labor as well as cost to machine the leading end portion 175 for the purpose of such engagement.

Further, as shown in Figs. 4A and 4B, because the leg portions 173 and 175 of the lid spring 171 are respectively secured to the projection portions 165 and 167 of the side plate 155 of the outer lid 151, there is a fear that the projection portions 165 and 167. can apply forces to the leg portions 173 and 175 in the upward direction in Fig. 4B to thereby incline and displace the coil portion 172 of the lid spring 171 from its proper position.

This is a second problem in the conventional magnetic tape cassette.

Furthermore, with the recent technological innovation due to the increased density of a magnetic recording medium, a magnetic tape cassette, a video tape recorder (which is hereinafter referred to as VTR), and the like have been made compact. As a result, VTR has been very often used outdoors in photographing or recording landscapes, figures and the like.

In view of the above, in the magnetic tape cassette, with its outdoor use taken into account, there have been practically used a lid of a two-lid type and a lid of a three-lid type which are used to cover the front and back surfaces of magnetic tape as a dust-proof measure.

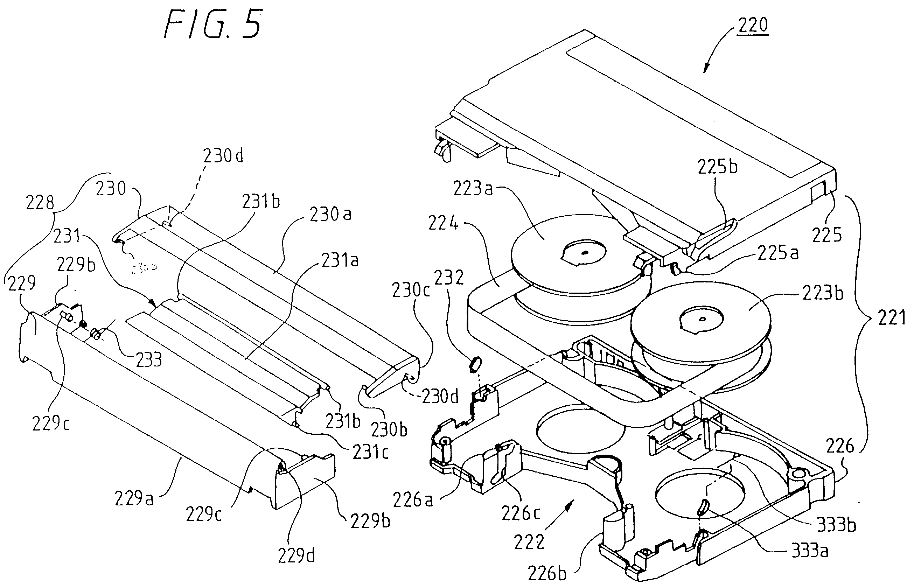

Now, Fig. 5 is an exploded perspective view of a magnetic tape cassette 220, so called as M or L cassette, for DVC incorporating therein a three-lid type of open/close lid which is capable of covering an opening formed in the front surface of a cassette main body in such a manner that the opening can be freely opened and closed. As shown in Fig. 5, the magnetic tape cassette 220 comprises a cassette main body 221 including an opening 222 formed in the front surface thereof for insertion of a tape draw-out member disposed on the side of equipment such as a video tape recorder (VTR) or the like, magnetic tape 224 which is stretched over the opening 222 by a pair of tape guides 226a and 226b respectively disposed on the front surface of the cassette main body 221 and around which a pair of reels 223a and 223b are wound, and an open/close lid 228 assembled on the front surface side of the cassette main body 221 in a freely openable and closable manner so that, when the magnetic tape cassette is carried or transferred, the magnetic tape 224 stretched over the opening 222 can be covered by the open/close lid 228.

The cassette main body 221 is composed of an upper half 225 and a lower half 226. Also, the open/close lid 228 is composed of three lids, that is, an outer lid (front lid) 229, a top lid (upper lid) 230, and an inner lid (rear lid) 231.

The outer lid 229 includes a front lid plate 229a for covering the front surface of the magnetic tape 224 stretched over the opening 222, and a pair of side plate portions 229b respectively hanging down from the two sides of the front lid plate 229a. And, on the respective inner wall surfaces of the side plate portions 229b, there are projectingly provided support shaft pins 229c, while the respective support shaft pins 229c are rotatably supported in their associated pin support holes 225a which are respectively formed in the two side surface portions of the upper half 225 that are located near the front surface of the upper half 225. Also, on the support shaft pin 229c, there is mounted a lid spring 233 which are capable of not only energizing the open/close lid 228 in its closing direction but also energizing a lid lock 232, which is rotatably mounted on the lower half 226, in the closing direction of the open/close lid 228. In addition, as shown in Fig. 5, a lid lock spring 333b is provided on the lower half 226 so as to be able to energize a lid lock 333a in a lock direction.

The top lid 230 comprises an upper lid plate 230a for covering the upper surface side of the magnetic tape 224 stretched over the opening 222, a pair of front lid connecting portions 230b which are respectively used to connect the two ends of the front edge side of the upper lid plate 230a to their associated upper end holes 229 respectively formed in the front lid plate 229a, and a pair of slide pins 230d which are respectively provided on and projected from two arm portions 230c extending from the rear end edge of the upper lid plate 230a and can be slidably engaged with two upper lid cam grooves 225b respectively formed in the two side surface portions of the upper half 225.

The top lid 230 is structured such that, when the open/close lid 228 is opened, the slide pins 230d are respectively allowed to move along their associated upper lid cam grooves 225b as the outer lid 229 is swing around the support shaft pins 229c.

The inner lid 231 comprises a inner lid plate 231a for covering the rear surface side of the magnetic tape 225 stretched over the opening 222, a pair of upper lid connecting portions 231b respectively for connecting the upper edge of the inner lid plate 231a to the upper lid plate 230a in a freely rotatable manner, and a pair of slide pins 231c which are respectively projected from the two end portions of the lower edge side of the inner lid plate 231a and can be engaged with their associated inner lid cam grooves 226c respectively formed in the inner surface portion of the lower half 4, while each inner lid cam groove 226c has an S-shaped section.

The inner lid 231 is structured such that, when the outer lid 229 is opened, as the top lid 230 is moved, the upper lid connecting portions 231b are respectively caused to move and follow the top lid 230 and, as the upper lid connecting portions 231b are moved, the slide pins 231c are respectively caused to move on their associated inner lid cam grooves 226c.

If the above-structured magnetic tape cassette 220 is loaded into the VTR, then the side plate portions 229b of the outer lid 229 are pushed up by lid-open pins disposed on the VTR side and, in linking with the then lid opening operation of the outer lid 229, the top lid 230 and inner lid 231 are opened. When taking out the magnetic tape cassette 220 from the VTR, reversely to the above, the respective lids are closed.

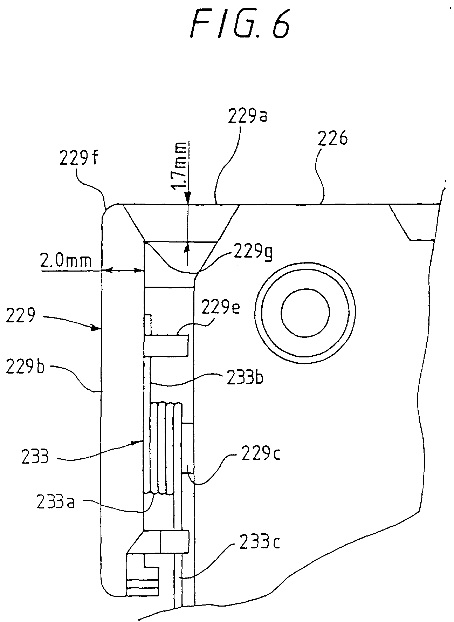

Next, Fig. 6 shows a bottom view of the magnetic tape cassette 220 when it is assembled. As shown in Fig. 6, the lid spring 233 is structured such that a coil portion 233a thereof is mounted on the support pin 229c of the outer lid 229, one leg portion 233b thereof is secured by a lid spring hitch rib 229e formed on the inner wall surface of the side plate portion 229b, and the other leg portion 233c thereof is secured to the upper half 225.

By the way, according to the structure of the above-mentioned magnetic tape cassette 220, if shocks are given to the edge portion 229f of the outer lid 229 when the magnetic tape cassette 220 happens to drop down onto the floor or the like, the outer lid 229 is shifted sideways and the lid spring hitch rib 229e is thereby firstly contacted with the side surface of the lower half 226. Therefore, there is a possibility that a transition portion 229g formed between the front lid plate 229a and side plate portion 229b of the outer lid 229 can be torn with the lid spring hitch rib 229e as a center thereof.

This is a third problem in the conventional magnetic cassette.

The present invention aims at eliminating the drawbacks found in the above-mentioned conventional magnetic tape cassette.

Particularly, the present invention aims at eliminating the second problem found in the above-mentioned conventional magnetic tape cassette. Accordingly, it is an object of the invention to provide a magnetic tape cassette which not only can be manufactured at a low cost but also can prevent the lid spring from being removed from its proper mounting position.

This objective is solved by a magnetic tape cassette having the features of claim 1.

Accordingly, there is provided a magnetic tape cassette comprising a cassette case having upper and lower halves and including an opening at the front end thereof, a pair of reels which are respectively so stored within said cassette case as to be freely rotatable while said two reels are energized toward the side of said lower half by their associated leaf springs, and around which a magnetic tape can be wound, a lid mounted for covering said magnetic tape passing through said opening in such a manner that said magnetic tape can be freely opened and closed, wherein said lid includes an outer lid which is provided with a front lid plate for covering the side of said front surface of said magnetic tape and two side plates respectively extended from two sides of said front lid plate, a lid lock for locking said lid in the closed state of said opening, a lid spring for energizing said lid in the closed state of said lid and simultaneously energizing said lid lock in the closed state of said lid, wherein said lid spring comprises a coil portion mounted on a pin erected at a right angle from one of said side plates, a first leg portion extended from one end of said coil portion and secured to a first projection portion provided on said side plate of said lid, and a second other leg portion extended from the other end of said coil portion and secured to a second projection portion of said side plate of said lid and also to said upper half so as to be engaged with said lid lock from the side of said upper half, and a throttle-shaped engaging recessed portion disposed on said upper half for receiving and engaging with a leading end portion of said second leg portion.

Due to the throttle-shaped engaging recessed portion formed in the upper half, the linear-shaped leading end portion of the leg portion of the lid spring is guided from the entrance of the engaging recessed portion and is then engaged with the engaging recessed portion, thereby being able to restrict the position of the leg portion of the lid spring.

Therefore, instead of working the leading end portion of the lid spring which requires time, labor and cost to work, simply by forming the throttle-shaped engaging recessed portion in the upper half, the lid spring can be prevented against removal from its proper mounting position. This can assure supply of a lid lock which is inexpensive and reliable.

According to a preferred embodiment, there is provided a magnetic cassette comprises: a cassette case composed of upper and lower halves and including an opening at the front end thereof; a pair of reels which are respectively so stored within the cassette case as to be freely rotatable and around which magnetic tape can be wound; a lid for covering the magnetic tape passing through the opening of the cassette case in such a manner that the magnetic tape can be freely opened and closed; a lid lock for locking the lid in the closed state of the opening; and, a lid spring capable of not only energizing the lid lock in the closed state of the lid but also energizing the lid lock in the closed state of the lid, the lid spring being mounted on a pin provided on and at right angles with respect to the side plate of lid, one leg portion of the lid spring being secured to a projection portion provided on the side plate of the lid, the other leg portion of the lid spring being secured not only to the projection portion of the side plate of the lid but also to the upper half to thereby be engaged with the lid lock from the upper half side, thereby allowing the lid spring to energize the lid and lid lock in the closed state of the lid, wherein, in the leading end of one leg portion of lid spring, there is formed an L-shaped portion bent in parallel to the center line of the coil portion of the lid spring and, in the side plate of the lid, there is provided a projection portion extending at right angles to the side plate of the lid for restricting the position of the L-shaped portion in such a manner as to be parallel to the pin of the lid.

According to this preferred embodiment, the projection portion, which is provided on the side plate of the lid and extends at right angles to the side plate of the lid, restricts the position of the L-shaped portion formed in one leg portion of the lid spring in such a manner that the L-shaped portion is parallel to the pin of the side plate of the lid, whereby the coil portion of the lid can be held at a proper mounting position with respect to the pin.

Therefore, simply by providing the projection portion on the side plate of the lid, the lid spring can be prevented against removal from its proper mounting position, which makes it possible to ensure supply of a lid lock which is inexpensive and reliable.

Particularly, this embodiment of the present magnetic tape cassette eliminates the record problem found in the above-mentioned conventional magnetic tape cassette.

According to a further preferred embodiment, there is provided a magnetic tape cassette, comprising:
a cassette case composed of upper and lower halves and including an opening at the front end thereof; a pair of reels which are respectively stored in a freely rotatably within the cassette case in such a manner that they are energized toward the lower half side by their associated leaf springs, and around which magnetic tape can be wound; a lid for covering the magnetic tape passing through the opening in such a manner that the magnetic tape can be freely opened and closed; a lid lock for locking the lid in the closed state of the opening; and, a lid lock spring for energizing the lid lock in the closed state of the lid, the lid lock spring consisting of a cantilever spring with one end thereof secured to the lower half, the free end of the lid lock spring being engageable with the lid lock from the upper half side to thereby be able to energize the lid lock in a closed state thereof, characterized in that the lid lock spring includes a coil portion and, in the lower half, there is formed hold means for displacing the coil portion in the radial direction thereof to thereby be able to hold the lid lock spring at a proper position.

According to a magnetic tape cassette of this embodiment, when the upper half is assembled to the lower half, the thus assembled cassette case is turned upside down to thereby position the lower half on the upper side, and the upper and lower halves are threadedly engaged with each other in this state, even if the lower half side of the cassette case is energized by the leaf springs to thereby produce a gap between the respective side walls of the upper and lower halves, the coil portion of the lid lock spring is displaced in the radial direction thereof by the hold means formed in the lower half, so that the lid lock spring can be held at a proper position.

Therefore, since the lid lock spring is prevented from removing from the proper position, the upper and lower halves can be tightened properly by the screws to thereby assemble the magnetic tape cassette, so that the efficiency and accuracy of the cassette assembling operation can be enhanced. Also, there is eliminated a fear that the lick lock spring can be removed from its proper mounting position due to shocks which are produced when the cassette is dropped down onto the ground or the like after it is assembled, which can assure a highly reliable lid lock.

A magnetic tape cassette according to this embodiment particularly eliminates the above-mentioned first problem in the conventional magnetic tape cassette.

Accordingly, there is provided a magnetic tape cassette which, as it is assembled, prevents a lid lock spring from being removed from its proper mounting position in a lower half.

According to a further preferred embodiment, the magnetic tape cassette comprises:
a cassette main body including an opening formed in the front surface thereof for insertion of a tape draw-out member and composed of upper and lower halves;
magnetic tape stretched over the above-mentioned opening by tape guides disposed on the front surface of the lower half and wound around a pair of reels;
an open/close lid including, as an element thereof, an outer lid composed of a front lid plate for covering the front surface side of the magnetic tape and two side plate portions respectively hanging down from the two sides of the front lid plate, the open/close lid being assembled in a freely openable and closable manner to the front surface side of the cassette main body so that the magnetic tap can be covered by the open/close lid; and,
one or more screwing portions formed in the front surface of the upper half and, when the open/close lid is closed, capable of screwing the upper and lower halves projected up to a position adjacent to the outer lid,
wherein, in order to be able to restrict the movement of the outer lid in the lateral direction thereof, there are formed in the outer lid one or more ribs which can be contacted with the peripheral surfaces of the screwing portions of the upper half.

According to another preferred embodiment, the magnetic tape cassette comprises:
a cassette main body having upper and lower halves and including an opening at the front end thereof;
a pair of reels which are respectively so stored within the cassette main body as to be freely rotatable while the two reels are energized toward the side of the lower half through leaf springs, and around which a magnetic tape can be wound;
a lid mounted for covering the magnetic tape passing through the opening;
a first lid lock for locking the lid in the closed state of the opening;
a lid spring for energizing the lid in the closed state and simultaneously energizing the first lid lock in the closed state,
at least one screwing portion formed in the front surface of the upper half for securing the upper and lower halves with a screw, the screwing portion being projected up to a position adjacent to the outer lid when the open/close lid is closed; and
at least one rib formed in the outer lid and contactable with the peripheral surface of the screwing portion of the upper half for restricting a movement of the outer lid in a lateral direction thereof, when the outer lid is moved relative to the cassette main body.

That is, according to the two preferred embodiments described directly above, while the outer lid is displaced in the lateral direction thereof when shocks are given to the outer lid, but, in this case, the ribs provided on the outer lid are contacted with the peripheral surfaces of the screwing portions of the upper half to function as a stopper, that is, the ribs are able to restrict the position of the outer lid.

Therefore, even if shocks are given to the outer lid due to the unexpected drop of the magnetic tape cassette onto the floor or the like, since the position of the outer lid can be restricted by the ribs, the two transition portions between the front lid plate and two side plate portions of the outer lid can be prevented against tear and thus the outer lid can be surely prevented against damage.

The two embodiments described directly above eliminate the third problem found in the above-mentioned conventional magnetic tape cassette. Accordingly, there is provided a magnetic tape cassette which prevents an open/close lid from being damaged even if shocks are given to the open/close lid when the magnetic tape happens to drop down onto the floor or the like.

The magnetic tape cassette according to another embodiment comprises:
a cassette main body including an opening formed in the front surface thereof for insertion of a tape draw-out member and composed of upper and lower halves;
magnetic tape stretched over the above-mentioned opening by tape guides disposed on the front surface of the lower half and wound around a pair of reels;
an open/close lid including, as an element thereof, an outer lid composed of a front lid plate for covering the front surface side of the magnetic tape and two side plate portions respectively hanging down from the two sides of the front lid plate, the open/close lid being assembled in a freely openable and closable manner to the front surface side of the cassette main body so that the magnetic tap can be covered by the open/close lid,
wherein two transition portions between the front lid plate and two side plate portions of the outer lid are formed larger in thickness than the front lid plate.

That is, according to this embodiment, when shocks are given to the outer lid, the concentrated loads of the transition portions can be prevented by the increased thickness of the transition portions between the front lid plate and side plate portions, so that the outer lid can be surely prevented from being torn in and from the transition portions thereof.

Therefore, even if shocks are given to the outer lid due to the unexpected drop of the magnetic tape cassette, the outer lid can be surely prevented against damage.

This embodiment eliminates the third problem found in the above-mentioned conventional magnetic tape cassette. Accordingly, there is provided a magnetic tape cassette which prevents an open/close lid from being damaged even if shocks are given to the open/close lid when the magnetic tape happens to drop down onto the floor or the like.

Here, if there is employed a structure consisting of a combination of the structure as set forth in the embodiment of the present invention in which there are provided the ribs to be contacted with the peripheral surfaces of the screwing portions of the upper half in order to be able to restrict the movement of the outer lid in the lateral direction with the structure as set forth in the embodiment in which the two transition portions between the front lid plate and two side plate portions of the outer lid are formed larger in thickness than the front lid plate, then not only the position restricting effect of the outer lid but also the concentrated load preventive effect due to the increased thickness can be both obtained, so that the outer lid damage preventive effect can be enhanced further.

Further preferred embodiments are laid down in further dependent claims.

In the following, the present invention is explained in greater detail with respect to several embodiments thereof together with the accompanying drawings, wherein:
Fig. 1 is an exploded perspective view of a conventional magnetic tape cassette;
Fig. 2 is an enlarged perspective view of the neighborhood of the side plate portion of the lower half;
Fig. 3 is an exploded perspective view of a conventional S-type magnetic tape cassette for DVC;
Fig. 4A is an upper surface view of the side plate of a conventional outer lid, and Fig. 4B is a side view of the side plate of the conventional outer lid;
Fig. 5 is an exploded perspective view of a conventional magnetic tape cassette;
Fig. 6 is a bottom view of a conventional magnetic tape cassette;
Fig. 7 is an inner surface view of a first embodiment of a magnetic tape cassette in particular, showing a portion in the neighborhood of the.side plate portion of a lower half of the magnetic tape cassette;
Fig. 8 is a partially sectional view of the above portion of the first embodiment when a lid lock and a lid lock spring are respectively assembled to the lower half;
Fig. 9A is an upper surface view of a lid spring employed in a second embodiment of a magnetic tape cassette and, Fig. 9B is a side view of the lid spring;
Fig. 10A is a partially enlarged inner surface view of an upper half employed in the second embodiment, and Fig. 10B is a section view taken along the line A-A shown in Fig. 10A;
Fig. 11A is an upper surface view of an outer lid employed in the second embodiment, and Fig. 11B is a side view of the side plate of the outer lid;
Fig. 12 is a plan view of a magnetic tape cassette according to a third embodiment;
Fig. 13 is a front view of a magnetic tape cassette according to the third embodiment; and
Fig. 14 is a bottom view of a magnetic tape cassette according to the third embodiment.

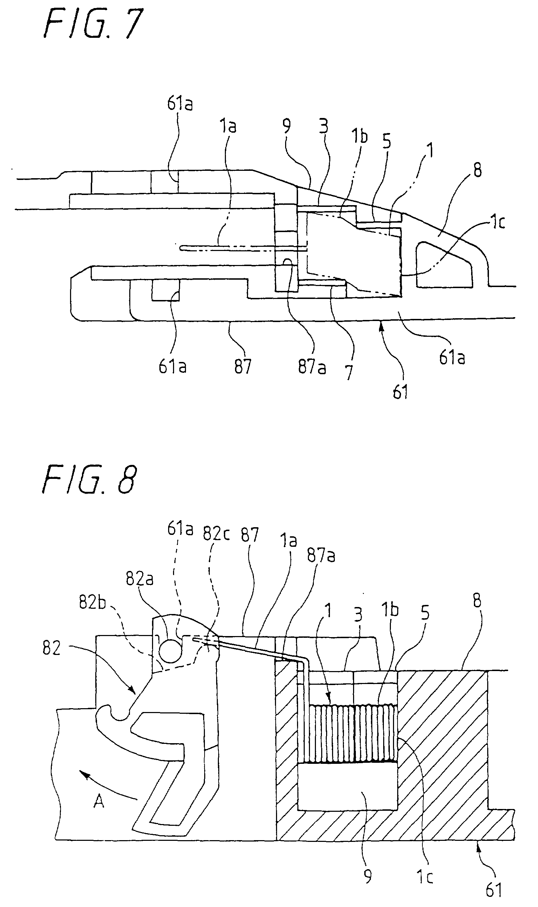

Now, description will be given below in detail of a first embodiment of a magnetic tape cassette with reference to the accompanying drawings. By the way, in the first embodiment, the same parts thereof as those of the conventional magnetic tape cassette shown in Figs. 1 and 2 are given the same designations , that is, description thereof will be given using the same designations. Fig. 7 is an inner surface view of a magnetic tape cassette according to the first embodiment, in particular, a portion in the neighborhood of the side plate portion of a lower half of the present magnetic tape cassette. And, Fig. 8 is a partially sectional view of the portion shown in Fig. 7 when a lid lock and a lid lock spring are respectively assembled to the lower half of the magnetic tape cassette.

As shown in Figs. 7 and 8, on the side plate portion of the lower half 61, there is mounted a guide member 87. And, the lid rod 82 is swingably mounted in such a manner that the shaft portion 82a thereof is supported in a cutaway portion 61a formed in the side wall of the guide member 87. The free end portion of a line spring 1a of the lid lock spring 1 is allowed to act on a projecting portion 82c provided within a vertically extending slit 82b which is formed in the lid lock 82. Thus, the shaft portion 82a of the lid lock 82 is supported in the cutaway portion 61a and the projecting portion 82c of the lid lock 82 is pressed by the line spring 1a, so that the lid lock 82 is energized in a lock direction A shown in Fig. 8.

Also, on the cassette rear side of the guide member 87, there are disposed a support portion 9 for supporting the coil portion 1b of the lid lock spring 1, three ribs 3, 5, 7 which are respectively formed on the support portion 9 to serve as hold means, and a rib 8 which also serve as hold means and can be contacted with the rear end portion 1c of the coil portion 1b of the lid lock spring 1. The three ribs 3, 5 and 7 are respectively formed in a flat plate shape and have substantially the same width and thickness. And, the width of the three ribs 3, 5 and 7 is set substantially one half of the length of the coil portion 1b of the lid lock spring 1 in the axial direction thereof, while the upper end portions thereof are respectively tapered so that they are able to guide the insertion of the lid lock spring 1. By the way, if the length of the line spring 1a of the lid lock spring 1 is extended by a given amount or the diameter of the coil portion 1b thereof is increased, then there can be eliminated the need for provision of the support portion 9.

Also, the distance between the ribs 3 and 7 is set equal to the distance between the rib 5 and a side plate 61a serving as hold means. And, the ribs 3, 5, 7 and side plate 61a are arranged in parallel to one another. Therefore, as shown in Fig. 7, if the coil portion 1b of the lid lock spring 1 is stored within these ribs 3, 5, 7, side plate 61a and rib 8, then the coil portion 1b is displaced in the radial direction of the lid lock spring 1. Thus, the rear end portion 1c of the coil portion 1b is contacted with the rib 8, part of the end portion of the coil portion 1b is contacted with the rib 3 and side plate 61a, and the substantially central portion of the coil portion 1b is contacted with the ribs 5 and 7, so that the lid lock spring 1 can be held in an unmovable manner. By the way, the side plate 61a may not be used, but another rib may be provided and contacted with the coil portion 1b.

Next, description will be given below of a method for assembling the above-mentioned magnetic tape cassette. At first, reels and other various components are stored into the lower half 61. And, the shaft portion 82a of the lid lock 82 is swingably mounted in the cutaway portion 61a of the guide member 87 and, after then, the coil portion 1b of the lid lock spring 1 is stored into within the ribs 3, 5, 7, side plate 61a and rib 8. Also, the line spring 1a of the lid lock spring 1 is contacted with the projecting portion 82c within the slit 82b of the lid lock 82 to thereby energize the lid lock 82 in the lock direction A, so that the closed state of the lid 69 can be locked.

Next, an upper half 75 with a lid 69 assembled thereto is assembled to the lower half 61. After then, the cassette case is turned upside down and the lower half 61 is thereby positioned on the upper side of the cassette case and, in this state, the upper and lower halves 75 and 69 are threadedly engaged together using screws 90. Here, the lower half 61 side of the cassette case is energized by the energizing forces of leaf springs 51 and 52 which are respectively mounted on the upper half 75 and the lower half 61 is thereby caused to float from the upper half 75, so that there is produced a slight gap between the side wall of the upper half 75 and the side wall of the lower half 61. However, since the coil portion 1b of the lid lock spring 1 is displaced by the ribs 3, 5, 7, side plate 61a and rib 8 in the radial direction thereof to thereby be able to hold the lid lock spring 1 at a proper position, the lid lock spring 1 can be prevented against removal from its given position. Therefore, the upper and lower halves 75 and 61 are tightened properly by the screws 90 to thereby assemble the magnetic tape cassette, which can enhance the efficiency and accuracy of the cassette assembling operation. Also, the operations of the ribs 3, 5, 7, side plate 61a and rib 8 prevent the lid lock spring 1 from being removed from its proper mounting position due to the shocks that are produced when the cassette is dropped down onto the ground or the like after it is assembled, which can assure supply of a highly reliable lid lock.

While one embodiment of the present magnetic tape cassette has been described heretofore, the present teaching is not limited to the above-mentioned embodiment but, of course, various chances and modifications are possible without departing from the subject matter of the invention. For example, the magnetic tape cassette is not limited to the digital video cassette (DVC) but can also be applied to other various cassettes which include a coil portion capable of energizing the lid lock. Also, the shape and position of the hold means for holding the lid lock spring at its proper position are not limited to the above-mentioned embodiment but, for example, it is also possible to employ a structure in which a plurality of cylindrical-shaped projections are provided and the coil portion of the lid lock spring is displaced by them to thereby hold the lid lock spring at its proper position.

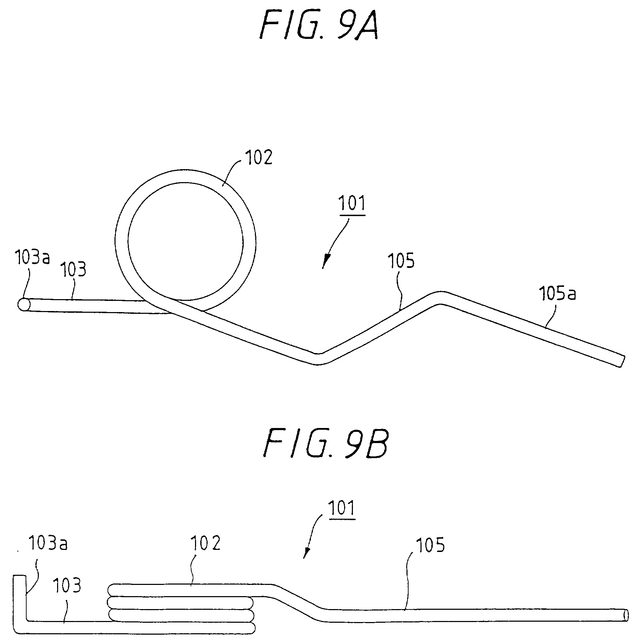

Now, description will be given below in detail of a second embodiment of a magnetic tape cassette with reference to the accompanying drawings. By the way, in the second embodiment, the same parts thereof as those employed in the above-cited the conventional magnetic tape cassette shown in Figs. 3 and 4 are given the same designations, that is, description thereof will be given using the same designations. Here, Fig. 9A is an upper surface view of a lid spring 101 employed in the second embodiment and Fig. 9B is a side view of the lid spring 101.

The magnetic tape cassette according to this second embodiment. similarly to the conventional magnetic tape cassette, comprises a cassette case which is composed of upper and lower halves and includes an opening formed at the front end thereof, a pair of reels which are respectively stored within the cassette case in a freely rotatably manner and around which magnetic tape can be wound, a lid for covering the magnetic tape passing through the above-mentioned opening of the cassette case in such a manner that the magnetic tape can be freely opened and closed, and a lid lock for locking the lid in the closed state of the opening.

Further, as shown in Figs. 9A and 9B, the lid spring 101 according to the second embodiment is structured in the following manner: that is, a coil portion 102 of the lid spring 101 can be mounted on a pin 131 provided on the side plate 125 of an outer lid 121 (which will be discussed later), one leg portion 103 thereof can be secured to a first projection portion 135 formed on the side plate 125, and the other leg portion 105 thereof can be secured not only to a second projection portion 137 formed on the side plate 125 but also to a securing projection portion 113 formed in the front end of an upper half 111 (which will be discussed later) to thereby be engaged with a lid lock 149 from the upper half 111 side, so that the lid spring 101 is able to energize the lid into its closed state.

As the characteristic structure of this second embodiment, on the leading end of the one leg portion 103 of the lid spring 101, there is formed an L-shaped portion 103a which is bent in parallel to the center line of the coil portion 102 of the lid spring 101, whereas the leading end portion 105a of the other leg portion 105 is formed in a linear shape. The L-shaped portion 103a can also be used as a part feeder for gripping the lid spring 101. Also, the lid spring 101 has a further function to energize a lid into its closed state, while the lid is composed of three components, namely, an outer lid 121, a top lid 152 and an inner lid 153.

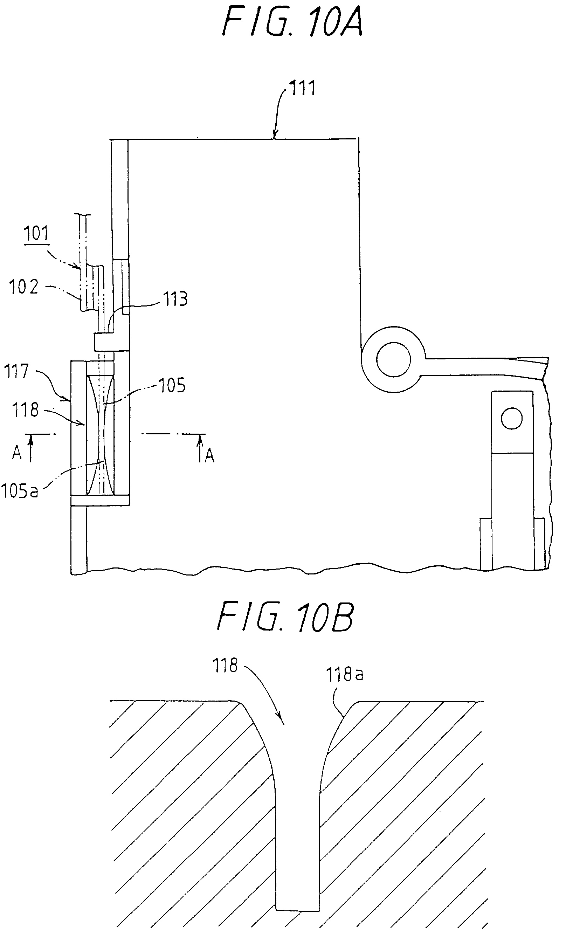

Now, Fig. 10A shows a partially enlarged inner surface view of the upper half 11, and Fig. 10B shows a section view taken along the line A-A shown in Fig. 10A. As shown in Fig. 10A, in the side plate portion 117 of the upper half 111, there is formed an engaging recessed portion 118. As shown in Fig. 10B, the engaging recessed portion 118 is formed as a space which spreads outwardly. In particular, the entrance 118a of the engaging recessed portion 118 is slightly wider and, as it approaches the bottom of the engaging recessed portion 118, the width becomes narrower: that is, the engaging recessed portion 118 shows a throttle-like shape.

Here, the linear-shaped leading end portion 105a of the leg portion 105 of the lid spring 101 is guided into the entrance 118a and is engaged with the neighborhood of the bottom of the engaging recessed portion 118, thereby being able to restrict the position of the leg portion 105 of the lid spring 1. Therefore, instead of working the leading end portion 105a of the lid spring 1 which would otherwise require time, labor and cost for working, simply by forming the throttle-shaped engaging recessed portion 118 on the upper half 111, the position of the lid spring 101 can be restricted and thus the lid spring 101 is prevented against removal from its proper mounting position. This can assure supply of a lid lock which is inexpensive and reliable.

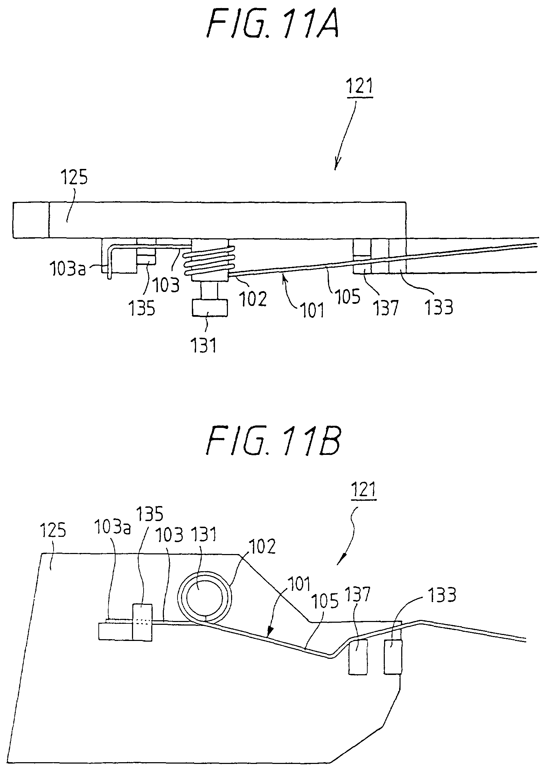

Now, Fig. 11A shows an upper surface view of the side plate 125 of the outer lid 21, and Fig. 11B shows a side view of the side plate 125 of the outer lid 121. As shown in Figs. 11A and 11B, on the side plate 125 of the outer lid 121, there is provided a first projection portion 135 which has an L-shaped section and is used to secure one leg portion 103 of the lid spring 101. The first projection portion 135 restricts the position of the L-shaped portion 103a bent in parallel to the center line of the coil portion 102 in such a manner to be parallel to the pin 131 of the side plate portion 125 of the outer lid 121, so that the coil portion 102 of the lid spring 101 can be held at a proper mounting position with respect to the pin 131. Therefore, simply by providing the projection portion 135 on the side plate 125 of the outer lid 121, the position of the lid spring 101 can be restricted and thus the lid spring 101 is prevented against removal from its proper mounting position, which makes it possible to assure supply of a lid lock which is inexpensive and reliable.

While one embodiment of the present magnetic tape cassette has been described heretofore, the present teaching is not limited to the above-mentioned embodiment but, of course, various changes and modifications are possible without departing from the subject matter of the invention. For example, the magnetic tape cassette is not limited to the digital video cassette (DVC) but it can also be applied to other various cassettes, provided that they include a coil portion capable of energizing the lid lock. Also, the open/close lid is not limited to a lid of a three-lid type but there can also be used an open/close lid of a two-lid type.

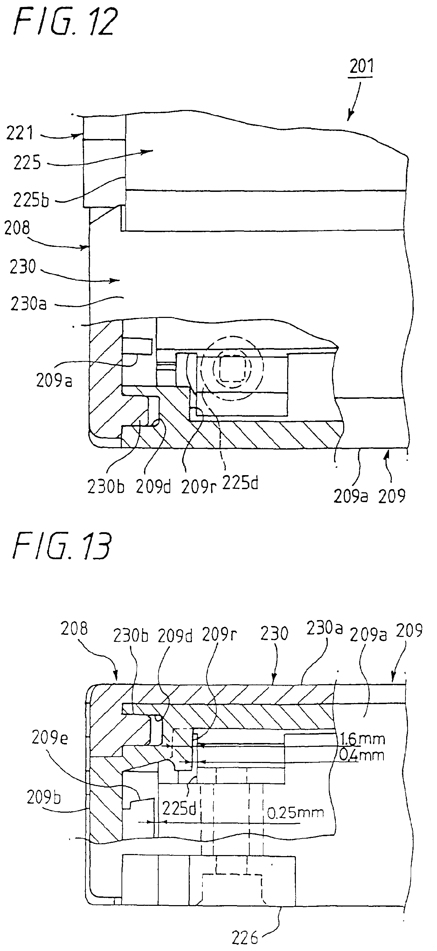

Now, description will be given below in detail of a third embodiment of a magnetic tape cassette with reference to the accompanying drawings. By the way, in the third embodiment, the same parts thereof as those employed in the above-mentioned conventional magnetic tape cassette are given the same designations and thus the description thereof will be given using the same designations. Fig. 12 is a plan view of a magnetic tape cassette 201 according to the third embodiment and Fig. 13 is a front view of the present magnetic tape cassette 201.

As shown in Figs. 12 and 13, the magnetic tape cassette 201 according to the third embodiment, similarly to the above-mentioned conventional magnetic tape cassette, comprises a cassette main body 221 including an opening formed in the front surface thereof for insertion of a tape draw-out member disposed on the side of equipment such as a VTR or the like, an upper half 225 and a lower half 226 cooperating together in forming the cassette main body 221, a pair of reels (not shown) rotatably disposed within the lower half 226, magnetic tape (not shown) wound around the pair of reels and stretched over the above-mentioned opening by tape guides (not shown) disposed on the front surface of the lower half 226, and an open/close lid 208 assembled to the front surface side of the cassette main body 221 in such a manner that, when the present magnetic tape cassette 201 is carried or transferred, the magnetic tape stretched over the opening can be covered by the open/close lid 208.

By the way, within the cassette main body 221, there are stored various parts besides the above-mentioned reels but, in Figs. 12and 13, such parts stored within the cassette main body 221 are omitted. Also, the open/close lid 208 is composed of three lids, namely, an outer lid (front lid) 209, a top lid (upper lid) 230, and an inner lid (rear lid) 231 (not shown).

The outer lid 209 includes a front lid plate 209a for covering the front surface side of the magnetic tape stretched over the opening, and two side plate portions 209b rescectively hanging down from the two sides of the front lid plate 209a. And, on th4e respective inner wall surfaces of the two side plate portions 209b, there are projectingly provided two support shaft pins (not shown), while the respective support shaft pins are rotatably fitted into and supported by two pin support holes (not shown) respectively formed in the two side surface portions of the upper half 225 that are located near the front surface of the upper half 225. Also, on the two support shaft pins, there are mounted two lid springs 213 (which will be discussed later) which are used to energize their associated lid locks (not shown), which are rotatably mounted on the lower half 226, in the closing direction of the open/close lid 208.

Also, in the upper half 225, in particular, at the positions thereof which exist in the front surface thereof and are situated near the two side surfaces thereof, there are formed two screwing portions 225d which, when the open/close lid 208 is opened, are able to screw together the upper and lower halves projected up to a position adjacent to the outer lid 209. And, in the neighborhood of the peripheral surfaces of the screwing portions 225d, there are provided two ribs 209r (in Figs. 12 and 13, only one of them is shown) having a clearance of 0.4 mm in such a manner that the two ribs 209r are united together with the inner wall surface of the outer lid 209. By the way, in the conventional magnetic tape cassette, such ribs are disposed at positions which are shown by broken lines in Fig. 13 and, therefore, their clearance is 1.6 mm.

Here, the displacement of the outer lid 209 in the lateral direction is restricted by a clearance of 0.25 mm between a lid spring hitch portion 209e and lower half 226. However, if shocks are applied to the outer lid 209 and the outer lid 209 is thereby displaced in the lateral direction, then the ribs 209r are contacted with the peripheral surfaces of the screwing portions 225d of the upper half 225. That is, the ribs 209r function as stoppers and thus restrict the position of the outer lid 209, thereby being able to reduce the displacement of the outer lid 209 in the lateral direction. For this reason, even if shocks are applied to the outer lid 209 because the magnetic tape cassette happens to drop down onto the floor or the like, since the displacement of the outer lid 209 in the lateral direction can be reduced by the ribs 209r, the transition portions between the front lid plate 209a and two side plate portions 209b of the outer lid 209 can be prevented against tear and thus the outer lid 209 can be prevented against damage.

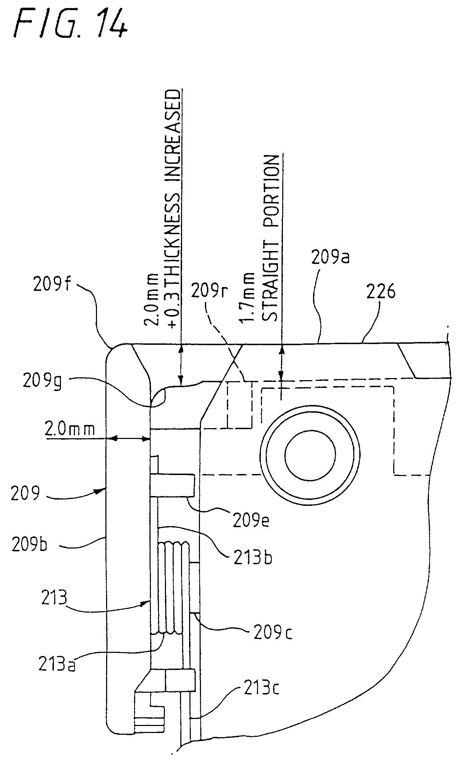

Next, in Fig. 14, there is shown a bottom view of the present magnetic tape cassette 201. As shown in Fig. 14, a lid spring 213 according to the third embodiment is structured similarly to the prior art: that is , a coil portion 213a thereof is mounted on the support shaft pin 209c of the outer lid 209, one leg portion 213b thereof is secured by the lid spring hitch rib 209e disposed on the inner wall surface of the side plate portion 209b, and the other leg portion 213c thereof is secured to the upper half 225.

Also, between the front lid plate 209a and two side plate portions 209b of the outer lid 209, there are formed two transition portions 209g. Each transition portion 209g is formed 0.3 mm larger in thickness when compared with the front lid plate 209a which has a thickness of 1.7 mm, that is, each of the two transition portion 209g has a thickness of 2 mm. Each of two joint portions between the transition portions 209g and side plate portions 209b has a radius of curvature R = 1mm. Here, if shocks are given to the edge portion 209f of the outer lid 209 due to the drop of the magnetic tape cassette onto the floor or the like, then the outer lid 209 is displaced in the lateral direction so that the lid spring hitch rib 209e is firstly contacted with the side surface of the lower half 226. Not only the displacement of the outer lid 209 in the jateral direction can be reduced by the above-mentioned ribs 209r, but also the concentrated loads onto the transition portions 209g can be prevented by the increased thickness of the transition portions 209g. That is, the increased thickness of the transition portions 209g can assure further the effect that the outer lid 209 can be prevented from being torn in and from the transition portions 209g thereof. Therefore, even if shocks are given to the outer lid 209 due to the drop of the magnetic tape cassette onto the floor or the like, the outer lid 209 can be prevented against damage.

By the way, the teaching is not limited to the above-mentioned embodiment but various changes and modifications are possible without departing from the subject matter of the invention. For example, the use of the present magnetic tape cassette is not limited to the digital video cassette but it can also be applied to various kinds of magnetic tape cassettes. Also, the open/close lid is not limited to an open/close lid of a three-lid type but it may also be an open/close lid of a two-lid type in which an outer lid and a top lid are formed of the same member and an inner lid is formed of a separate member. Further, the damage preventive effect of the outer lid 209 can also be provided by a structure which includes at least one of the above-mentioned ribs 9r of the outer lid 209 or at least one of the above-mentioned increased-thickness transition portions 209g of the outer lid 209.

As has been described hereinbefore, according to an embodiment, the lid lock spring includes the coil portion and, in the lower half, there is formed the hold means which displaces the coil portion of the lid lock spring to thereby be able to hold the lid lock spring at its proper position. This makes it possible to prevent the lid lock spring from being removed from the proper position.

Therefore, the upper and lower halves can be tightened properly by the screws to therebv assemble the magnetic tape cassette, which makes it possible to enhance the efficiency and accuracy of the cassette assembling operation. Also, there is eliminated a fear that the lid lock spring can be removed from its proper mounting position due to the shocks that could be produced when the cassette is dropped down onto the ground or the like after it is assembled, which can assure a highly reliable lid lock.

According to a further embodiment, one leg portion of the lid spring includes a leading end portion which is formed in a linear shape and, in the upper half, there is formed a throttle-shaped engaging recessed portion into which the linear-shaped leading end portion of one leg portion can be engaged. Therefore, instead of working the leading end portion of the lid spring which would otherwise require time, labor and cost to work, simply by forming the throttle-shaped engaging recessed portion in the upper half, the lid spring can be prevented against removal from its proper mounting position. This can assure supply of a lid lock which is inexpensive and reliable.

Also, according to another embodiment, in the leading end of one leg portion of the lid spring, there is formed the L-shaped portion which is bent in parallel to the center line of the coil portion of the lid spring and, in the side plate of the lid, there is provided the projection portion which extends at right angles to the side plate of the lid and is capable of restricting the position of the L-shaped portion in such a manner as to be parallel to the pin of the outer lid. Therefore, simply by providing the projection portion on the side plate of the outer lid, the lid spring can be prevented against removal from its proper mounting position, which makes it possible to assure supply of a lid lock which is inexpensive and reliable.

As has been described heretofore, according to further embodiments, in order to be able to restrict the movement or displacement of the outer lid in the lateral direction, there is employed a structure in which the ribs contactable with the peripheral surfaces of the screwing portions of the upper half are provided on the outer lid, or a structure in which the transition portions between the front lid plate and two side plate portions of the outer lid are formed larger in thickness than the front lid plate. Thanks to this, even if shocks are given to the outer lid due to drop of the magnetic tape cassette onto the floor or the like, the outer lid can be surely prevented against damage.

Note that although the above-mentioned embodiments are separately explained in the above-mentioned descriptions , it is, of course, possible to combine two or more of these embodiments (in other words, two or more of the subject matters of the embodiments). At that time, functions and effects obtainable from respective embodiments (the respective subject matters) thereof can be enjoyed as a combination thereof.

While there has been described in connection with the preferred embodiment, it will be obvious to those skilled in the art that various changes and modifications may be made therein without departing from the teaching.

## Claims

1. A magnetic tape cassette comprising a cassette case (220) having upper and lower halves (225,226) and including an opening (222) at the front end thereof, a pair of reels (223a,223b) which are respectively so stored within said cassette case (220) as to be freely rotatable while said two reels (223a,223b) are energized toward the side of said lower half (226) by their associated leaf springs, and around which a magnetic tape (224) can be wound, a lid mounted for covering said magnetic tape passing through said opening (222) in such a manner that said magnetic tape can be freely opened and closed, wherein said lid includes an outer lid (121) which is provided with a front lid plate for covering the side of said front surface of said magnetic tape and two side plates (125) respectively extended from two sides of said front lid plate, a lid lock (159) for locking said lid in the closed state of said opening (67), a lid spring (101) for energizing said lid in the closed state of said lid and simultaneously energizing said lid lock (159) in the closed state of said lid, wherein said lid spring (101) comprises a coil portion (102) mounted on a pin (131) erected at a right angle from one of said side plates (125), a first leg portion (103) extended from one end of said coil portion and secured to a first projection portion (135) provided on said side plate of said lid, and a second other leg portion (105) extended from the other end of said coil portion and secured to a second projection portion (137) of said side plate of said lid and also to said upper half so as to be engaged with said lid lock from the side of said upper half, **characterized by** a throttle-shaped engaging recessed portion (118) disposed on said upper half (111) for receiving and engaging with a leading end portion (105a) of said second leg portion.

2. A magnetic tape cassette according to claim 1, **characterized in that** said first leg portion (103) of said lid spring has at its leading end an L-shaped portion (103a) which is bent in parallel to a center line of said coil portion.

3. A magnetic tape cassette according to claim 1 or 2, **characterized in that** said lid comprises a projecting portion (113) erected at right angles from said side plate (125) of said lid for restricting a position of said L-shaped portion so as to be parallel to said pin of said lid.

4. A magnetic tape cassette according to at least one of the preceding claims 1 to 3, **characterized by** at least one screwing portion (225d) formed on said upper half (225) for securing said upper and lower halves (225, 226) with a screw, said screwing portion being projected up to a position adjacent to said outer lid (209) when said lid is closed; and
at least one rib (209r) formed in said outer lid (209) and contactable with the peripheral surface of said screwing portion of said upper half for restricting a movement of said outer lid (209) when said outer lid is moved relative to said cassette main body in a lateral direction thereof.

5. A magnetic tape cassette according to at least one of the preceding claims 1 to 4, **characterized by** a further lid lock (333a, 82) disposed on the opposite side of said lid lock in the lateral direction for locking said lid in the closed state of said opening;
a lid lock spring (333b, 1) for energizing said further lid lock (333a) in the closed state of said lid.

6. A magnetic tape cassette according to claim 5, **characterized in that** said lid lock spring (333b, 1) includes a cantilever spring (1) which has at its one end a coil portion (1b) secured to said lower half and at its other end a free end portion (1a) which is extended from said coil portion (1b) and is engageable with said second lid lock (333a) from the side of said upper half to thereby energize said second lid lock (82) in a closed state thereof.

7. A magnetic tape cassette according to claim 6, **characterized by** a holding member (3, 5, 7, 8, 51a) disposed on said lower half for displacing a part of said coil portion in a radial direction of said coil portion and holding said lid lock spring at a predetermined position in said lower half through an elastic returning force of said coil portion.

8. A magnetic tape cassette according to claim 7, **characterized in that** said holding member (3, 5, 7, 8, 61a) comprises at least three ribs (3, 5, 7) erected from said lower half (226).

9. A magnetic tape cassette according to claim 8, **characterized in that** said three ribs (3, 5, 7) are respectively formed in a flat plate shape, and a width of each three ribs is substantially equal to half of the length of said coil portion (1b) in the axial direction of said lid lock spring (333b).

10. A magnetic tape cassette according to at least one of the preceding claims 1 to 9, **characterized in that** each of two transition portions (229b) between said front lid plate and said two side plate portions of said outer lid is formed larger in thickness than a portion between said transition portions of said front lid plate.
